# EUROPEAN PATENT APPLICATION

(11) **EP 1 635 528 A1**
(43) Date of publication of application: **15.03.2006**
(21) Application number: 04292201.3
(22) Date of filing: 13.09.2004
(51) Int. Cl.: H04L 29/06, H04L 12/28

(54) **A method to grant access to a data communication network and related devices**

(71) Applicant: ALCATEL, 75008 Paris (FR)
(72) Inventor: De Jaegher, Jeanne Emmanuelle Rita, 1050 Brussels (BE); Six, Erwin Alfons Constant, 9270 Kalken (BE); Beck, Michael Andries Thomas, 2000 Antwerp (BE); Papadimitrou, Dimitri, 1190 Brussels (BE)
(74) Representative: Narmon, Gisèle Marie Thérèse

(57) **Abstract**

A method to grant a supplicant (SUP1,SUP2) access to a data communication network and related devices is claimed. A first supplicant is associated to a Medium Access Control address (MAC1) and is coupled to a first port (P1) of an authenticator (AU) of the data communication network. The method comprises:
a step of transmitting an authentication request by the authenticator to an authentication server being coupled thereto; and
a step of making by the authentication server an authentication decision based upon predefined rules and conditions; and
a step of transmitting by the authentication server the authenticator an authentication reply that comprises a result of the authentication decision. The method further comprises a step of developing by the authentication server a first registration memory (MEM1) that comprises entries whereby an entry comprises an association between a Medium Access Control Address of a granted supplicant and a granted password (PSWD1), the granted supplicant received previously a grant to the data communication network. The predefined rules and conditions comprises a first controlling step of the first registration memory upon a presence of a previous entry that comprises a first association between the first Medium Access Control Address of the first supplicant and a first password for the supplicant. In the event when the first controlling step is positive the method further comprises generating a result that comprises an authentication for the first Medium Access Control address the first password and thereby granting the first supplicant to access the data communication network via the first port of the authenticator.

## Description

The present invention relates to a method to grant a supplicant access to a data communication network. The present invention relates also to an authentication server and an authenticator that realizes such a method. Such a method and devices are already known from the *IEEE Standard 802.1X-2001.*

Therein it is described at page 5 - § *3.1* that a supplicant is an entity at one end of a point-to-point Local Area Network Segment that is authenticated by and authenticator attached to the other end of that link. It has to be remarked that the term supplicant is used in this document instead of devices such as a peer, which is used in other access control-related specifications.

At page 5 - § 3.1 it is also described that a Network access port is a point of attachment of a system to a LAN. It can be a physical port, for example, a single LAN Medium Access Control attached to a physical LAN segment, or a logical port, for example, an association between a station and an access point. It has to be remarked that the term "port" is used in this document as an abbreviation of network access port.

Furthermore it is described that an authenticator is an entity at one end of a point-to-point LAN segment that facilitates authentication of the entity attached to the other end of that link. The authenticator is responsible for communication with the supplicant and for submitting the information received from the supplicant to a suitable authentication server in order to ensure the check up of the credentials and to determine thereby the consequent state.

An authentication Server is an entity that provides an authentication service to an authenticator. This service determines, from the credentials provided by the supplicant, whether the supplicant is authorized to access the services provided by the authenticator. The authentication server functions can be collocated with an authenticator, or it can be accessed remotely via a network to which the authenticator has access.

In this way, the method to grant a supplicant access to a data communication network, whereby the supplicant is associated to a Medium Access Control address and is coupled to a port of the authenticator of the data communication network, comprises the following steps:
- a step of transmitting an authentication request by the authenticator to an authentication server being coupled thereto; and
- a step of making by the authentication server an authentication decision based upon predefined rules and conditions; and
- a step of transmitting by the authentication server to the authenticator an authentication reply that comprises a result of the authentication decision.

Furthermore at page 10 of this IEEE *Standard 802.1X-2001*, it is mentioned that the details of communication between the authenticator and the authentication server are outside the scope of this IEEE Standard 802.1X-2001. However, such communication could typically be implemented by means of an Extensible Authentication Protocol, shortly called herein EAP, connection carried over appropriate higher layer protocols, for example, by means of the EAP RADIUS. Hence the authentication server can be located outside of the confines of the LAN that supports the "EAP over LAN" i.e. the EAPOL, exchanges between supplicant and authenticator; and the communication between the authenticator and authentication server need not be subject to the authentication state of the controlled port(s) of the systems concerned.

In this way, according to this possible implementation, and as it is described by the IETF *RFC* 2865, June 2000 - § 2 *Operation*/*Introduction*, the authentication server, as the RADIUS server, receives the request, it validates the sending client i.e. the authenticator, and it consults a database of users i.e. supplicants to find the user whose name matches the request. The user entry in the database contains a list of requirements that must be met to allow access for the user. This mostly includes verification of the password, but can also specify the client(s) of port(s) to which the user is allowed access. Furthermore, at page 6 of this Standard, it is described that if all conditions are met, the list of configurations values for the user i.e. the supplicant, is placed into an "Accept" response. These values include the type of service and all necessary values to deliver the desired service. These values may include values such as an IP address, a subnet-mask, the desired compression, and desired packet filter identifiers or desired protocol and host.

The step of making by the authentication server an authentication decision based upon predefined rules and conditions is also described at page 7-*IEEE Standard 802.1X-2001* i.e. the authenticator server performs the authentication function to check the credentials of the supplicant on behalf of the authenticator and indicates whether the supplicant is authorized to access the authenticator's services. In this way port-access-control provides an extension to the functionality of a system that offers a means of preventing unauthorised access by supplicants to the services offered by that system. For example, if the system concerned is a MAC Bridge, control over access to the Bridge and the LAN to which it is connected can be desirable in order to restrict access to publicly accessible Bridge Ports, or within an organisation, to restrict access to a departmental LAN to members of that department.

Access control is achieved by the system-enforcing authentication of supplicants that attach to the system's controlled Ports. From the result of the authentication process, the system can determine whether or not the supplicant is authorized to access its services on that controlled Port. If the supplicant is not authorized for access, the system sets the controlled Port State to unauthorized. The mechanisms defined can be applied to allow any System to authenticate another System that is connected to one of its controlled Ports. The Systems concerned include end stations, servers, routers, and MAC Bridges.

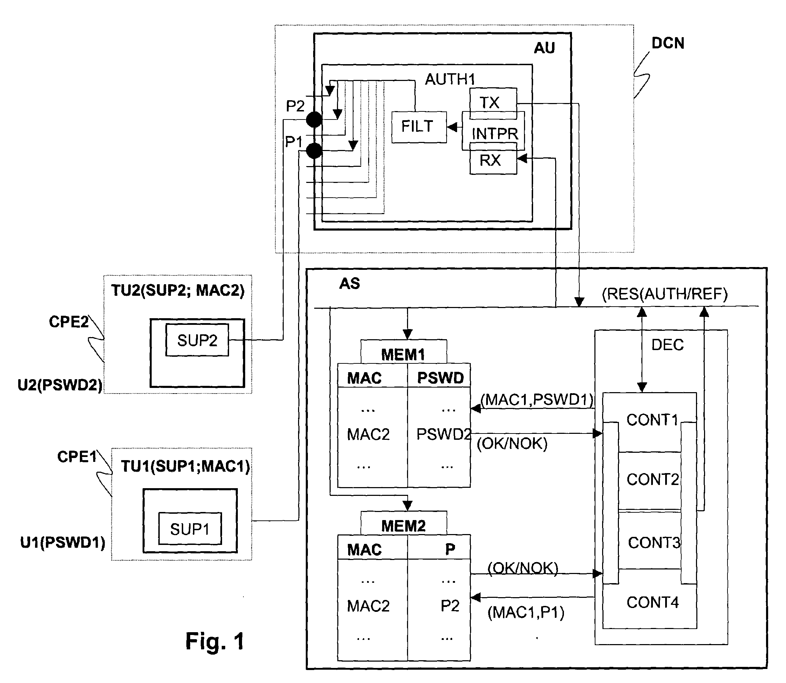

It has to be remarked that at page 21 - § *8.2 Scope ― of IEEE Standard 802.1X-2001,* it is described that the operation of Port-based Access Control assumes that the Ports on which it operates offers a point-to-point connection between a single supplicant and a single authenticator. It is this assumption that allows the authentication decisions to be made on a per-Port basis. And furthermore that "the authentication of multiple supplicants attached to a single authenticator is outside of the scope of this standard". It has to be explained however that in order not to overload the present description and the present Figure 1, the authenticator described in the preamble of the claims and in this further description is an integration of a plurality of authenticators as described in the Standard. However, it has to be understood that the authentication decision, in the above-mentioned Standard *802.1X-2001,* remains on a per-Port basis. Moreover, the authenticator of the present invention can be implemented according to a distributive way, over the different ports, which brings it back into the one-to-one relation between supplicant and authenticator.

A problem outstanding with this method to grant a supplicant, e.g. SUP1, access to a data communication network will be described now by means of an example. Presume a following topology wherein a first user is using a first customer premises equipment with a first supplicant SUP1 that is coupled to a first port P1 of an access unit that comprises such an authenticator AUTH1; and that a second user is using a second customer premises equipment with a second supplicant SUP2 that is coupled to a second port P2 of this access unit. The method to grant the first supplicant SUP1 access to the data communication network DCN of the authenticator, comprises:
a step of transmitting an authentication request by the authenticator AUTH1 to an authentication server AS being coupled thereto; and
a step of making by the authentication server AS an authentication decision based upon predefined rules and conditions; and
a step of transmitting by the authentication server AS to the authenticator an authentication reply that comprises a result of said authentication decision.

As it is described above, the authentication decision comprises a list of requirements that must be met to allow access for the user. This list comprises mostly verification of the password, but can also specify the client(s) of port(s) to which the user is allowed access. Presume that based on the first user's password verification, the first supplicant SUP1 is authorized to get access via the first port P1 of the authenticator to the communication network.

Now, the method to grant the second supplicant SUP2 access to the data communication network of the authenticator comprises similar steps. Based upon the second user's password verification, the second supplicant SUP2 is authorized to get access via the second port P2 of the authenticator to the communication network. However, in the event when the second premises equipment uses a Medium Access Control address e.g. MAC2 being associated to the second supplicant SUP2, which has e.g. by coincidence a same value as the Medium Access Control address MAC1 that is used by the first premises equipment i.e. being associated to the fist supplicant SUP1, the result will still comprise an authentication for this second supplicant. This means that independently of the fact that the Medium Access Control addresses have the same value or not, each supplicant will receive its grant by merely fulfilling the password requirements. This results in MAC address duplicates and thereby in denial of service and/or service degradation attacks.

Such MAC address duplicates are often solved by solutions in the MAC data plane or the Internet Protocol layer data plane, such as e.g. MAC address translations, VLAN segregation or MAC address registration in the Access node itself.

With the above methods the MAC address duplicates are mostly solved in one access node independently of other access nodes and suppose that MAC address duplicates are rare events since users cannot know each-other MAC address. However, these solutions break down when direct peer-to-peer communication is allowed between users of the same access node and users of different access nodes. When peer-to-peer communication is allowed, users will also know each other MAC address and therefore any user can steal the MAC address of another. Again, this still results in denial of service and/or service degradation attacks.

Furthermore, the known authentication methods associate a user's credential i.e. its password, with its DSL line i.e. the port of the authenticator AUTH1, whereby user nomadism is not allowed. This means that the above mentioned first user would not be allowed to go to the second user's home and to use the computer that comprises the second supplicant of the second user with its own password (password of the first user); or this means that the above mentioned first user would not be allowed to go at the second user's home in order to use there its own computer (of the first user) with its own password (password of the first user).

An object of the present invention is to provide a method to grant a supplicant access to a data communication network and an authentication server and authenticator performing such a method, such as the above known ones but whereby user nomadism is allowed and whereby Medium Access Control address stealing prohibited.

According to the invention, this object is achieved by means of the method of claim 1, the authentication server of claim 5 and the authenticator of claim 9. Indeed due to the fact that the method further comprises a step of developing by the authentication server a first registration memory that comprises entries. One such entry comprises an association between a Medium Access Control address of a granted supplicant and a for said granted supplicant that previously received a grant to access an allowed data communication network via an authenticated port. Furthermore the predefined rules and conditions comprises a first controlling step of controlling the first registration memory by means of a first control means of the decision means, upon a presence of a previous entry that comprises a first association between the Medium Access Control address of the first supplicant and the password for the first supplicant. Furthermore, in the event when this first controlling step is positive, the method further comprises a step of generating a result that comprises an authentication for the first Medium Access Control address with the first password and thereby granting the first supplicant to access the data communication network via the first port of the authenticator.

Indeed, since the registration memory is built up, all supplicants e.g. SUP2 that received previously an authentication i.e. a grant to access an allowed data communication network are registered in this first registration memory by means of an entry that comprises a pair (MAC address being associated to the supplicant; password of the user that uses the customer premises equipment that comprises this supplicant ) e.g. (MAC2, PSWD2). Upon reception of a new authentication request from the authenticator by the authentication server for a particular supplicant e.g. SUP1 that desires access, the authentication server first controls for this particular supplicant, the presence of an association-entry i.e. the pair (associated MAC address of the particular supplicant; password of the user for the supplicant) e.g. (MAC1, PSWD1) in the first registration memory. When this association-entry is present in the database i.e. the first registration memory, the first supplicant being used by the first user is authorized access. Even when this first user would not be at its own place, as long as this particular association (MAC1, PSWD1) is present, access to the network is allowed.

The information i.e. associated MAC address of the particular supplicant and the password for the supplicant i.e. password of the user that uses the customer premises equipment which comprises the supplicant, are usually to be found in the authentication request of the authenticator.

Besides the execution of the usual rules and conditions, the execution of this first controlling step of the authentication server i.e. taking into account the MAC address / user password relation, provides an improved result of the authentication decision i.e. the result now allows user nomadism in a data communication network.

Furthermore the authenticator comprises an interpreter to interpret the authentication reply as being received from an authentication server that indeed takes the (MAC address, user password) association into account. The interpreter also sets a filter of this authenticator according to the content of the result in the authentication reply. Hereby, in the event when the result comprises an authentication for the Medium Access Control address and for the user password, whereby the supplicant with the Medium Access Control address was indeed granted to access the data communication network via the port of the authenticator, the filter is set to accept traffic of the supplicant via the port, but only for the specified Medium Access Control address. Similar in the event when the result comprises a refusal for the Medium Access Control address with the user password, whereby the supplicant with the Medium Access Control address is denied to access the data communication network via the port of the authenticator, the filter is set to refuse all traffic of the supplicant.

This means that access to a data communication network via a port of the authenticator is granted to a supplicant for only the MAC address for which the authentication procedures was successfully fulfilled in association with the user password of the supplicant.

So, in the event when the first controlling step, being executed by the authentication server, is positive, the method according to the present invention comprises a step of generating by the decision means a result that comprises an authentication which thereby grants the supplicant with the Medium Access Control address and the associated user password to the data communication network via the port of the authenticator. This means that when a first full match of the requesting pair (MAC address, password) is found in the registration memory, this same (MAC address, password)-pair i.e. this same supplicant at with the same password, already received previously a grant to access the communication network. The user of the customer premises equipment of this supplicant desires to access the network again. Permitting access again, even at a different access line, allows user nomadism.

Furthermore, in the event when the first controlling step is negative, the method further comprises a second controlling step, executed by a second control means, of controlling the first registration memory upon a presence of previous entry that comprises a second association between the Medium Access Control address of the supplicant with any other password i.e. a check upon a semi-match with an entry of the first registration memory. Indeed, the first registration memory is controlled upon the presence of the MAC address of the supplicant e.g. SUP2, even when the entry was made in association with another password as the password for which access is requested for the supplicant. In the event when the second controlling step is negative, the method further comprises a step of generating by the decision means a result that comprises an authentication for the first Medium Access Control address with the first password and thereby granting the first supplicant to access the data communication network via the first port of the authenticator. Furthermore, the method comprises a step of registering an entry in the first registration memory with the first association the first Medium Access Control Address the first supplicant and the first password the first supplicant. This is described in claim 2 and claim 6. Indeed, when the first Medium Access Control address is not at all present, not being associated with the first user password nor with another user password, it means that no previous access was provided. This concerns a new access that is allowed. Hereby it is needed to complete the first registration memory and to insert the new learned association between the first Medium Access Control address and the user password for the supplicant.

It has to be remarked that the wordings 'second association' doesn't mean that the MAC address should be found for a second time in the registration means. The 'second association' just means that a 'second kind of association' i.e. a 'second kind of entry' is to be look-up in the first registration memory. More precisely the presence of a previous entry upon a pair (MAC address; any other password besides the password for which the request was received) is controlled by the second control means.

Furthermore, the method further comprises developing by the authentication server a second registration memory that comprises entries whereby an entry comprises an association between a Medium Access Control address of a granted supplicant and an authenticated port for the granted supplicant that received previously a grant to access an allowed data communication network via the authenticated port; and in the event when the second controlling step would have been negative, also registering an entry in the second registration memory with an association between the first Medium Access Control Address of the first supplicant and the first port of the authenticator. This means that besides the entries with an association (Medium Access Control address / password) also entries with an association (Medium Access Control address / port of the authenticator via which the supplicant is coupled to the authenticator) are kept. This is described in claim 3 and claim 7.

Furthermore, the method also comprises, in the event when said second controlling step is positive:
- a third controlling step of controlling with a third control means this second registration memory upon a presence of a previous entry that comprises a third association between the first Medium Access Control address of the first supplicant and the first port of the authenticator; and
- a fourth controlling step of controlling with a fourth control means this second registration memory upon a presence of a previous entry that comprises a fourth association between the first Medium Access Control address of the first supplicant and another port of the authenticator; and
- in the event when the third controlling step is positive, the method further comprises a step of generating a result that comprises an authentication for the first Medium Access Control address with the first password and thereby granting the first supplicant to access the data communication network via the first port of the authenticator; and
- in the event when the third controlling step is negative and the fourth controlling step is positive, generating a result that comprises a refusal for the first port and for the first Medium Access Control address and thereby denying the first supplicant to access the data communication network via the first port.

By comprising the third and fourth controlling step, the second registration memory is also checked upon the presence of entries regarding the Medium Access Control address of the supplicant that demands access to the network. In the event when an association of the first Medium Access Control address with another password was found in the first registration memory and this first Medium Access Control address is also to be found in the second registration memory, the associated port in the second registration memory plays a role. When this associated port is indeed the port via which the first supplicant requests access i.e. the first port, authorization is provided, since this means that the user is at another home, using this home's computer with its own (first user) password i.e. user nomadism.

Finally, when the first Medium Access Control address is, besides an association with another password, is found back in an entry in the second registration memory in association with another port, the first Medium Access Control address is stolen whereby access is refused i.e. the authentication server thereby denies the first supplicant associated with the first Medium Access Control address to access the data communication network via the requested port of the authenticator. Indeed, allowing a supplicant with a particular MAC address to access the data network in the event when this MAC address was already previously registered in the registration memory, although at another port, would generate MAC duplication. The presence of the entry in the registration memory of the MAC address in association with another port has the meaning that either the requesting supplicant has by coincidence the same particular MAC address as already registered or has the meaning that a malicious user has been steeling the particular MAC address and that he tries to use it. In both situations access to the data communication network by the supplicant with this particular MAC address should be avoided. This is realized by comprising a refusal in the result of the decision means. This is described in claim 4 and claim 8.

It has to be mentioned that access is granted by means of generating by the decision means a result that comprises an authentication.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein Figure 1 represents a global communication network.

The working of the device according to the present invention in accordance with its telecommunication environment that is shown in figure 1 will be explained by means of a functional description of the different blocks shown therein. Based on this description, the practical implementation of the blocks will be obvious to a person skilled in the art and will therefore not be described in details. In addition, the principle working of the method to grant a supplicant access to a data communication network will be described in further detail.

Referring to Figure 1, a global communication network is shown.

The global communication network comprises two customer-premises-equipment i.e. first customer premises equipment CPE1 and second customer equipment CPE2; a data communication network DCN and an Authentication Server AS.

The first and second customer premises equipment CPE1 and CPE2 are each coupled to the data communication network DCN.

The Authentication Server AS is also coupled to the data communication network DCN.

The second customer premises equipment CPE2 comprises a terminal unit TU2. The terminal unit TU2 comprises a supplicant SUP2 and has a Medium Access control address MAC2.

The other customer equipment CPE1 comprises a Terminal Unit TU1. The terminal unit TU1 has a MAC address MAC1 and comprises a supplicant SUP1. In this way the supplicant SUP1 is associated to the MAC1 address.

Presume that in normal situation the first and second customer premises equipment CPE1 and CPE2 are respectively used by a first user U1 having password PSWD1and a second user U2 having password PSWD2.

The Data communication Network DCN comprises an Access Unit that comprises a plurality of ports. Two ports, P1 and P2, are explicitly shown. These two ports of the Access Unit are coupled to each one of the customer premises equipment. More in detail, the first customer premises equipment CPE1 is coupled via a first port P1 of the access unit AU to the data communication network DCN and the other customer premises equipment CPE2 is coupled via another port P2 of the access unit AU to the data communication network. The access unit AU comprises an authenticator AUTH1 that comprises a transmitter TX, a receiver RX and a filter FILT. The transmitter TX and the receiver RX are both coupled to the authentication server AS. The transmitter TX and the receiver RX are also coupled to the interpreter INTPR that on its turn is coupled to the filter FILT. According to this embodiment the filter FILT is also coupled to the different ports of the access unit AU. The coupling to the two ports P1 and P2 are explicitly shown in Figure 1. The couplings to the other ports are only shown with a dotted line.

The Authentication server AS comprises a decider DEC that is coupled to an input/output of the authentication server AS. The decider DEC comprises a first controller CONT1, a second controller CONT2, a third controller CONT3 and a fourth controller CONT4.

The authentication server AS further comprises a registration memory MEM that is coupled to an input/output of the authentication server AS and to the decider DEC.

The supplicants SUP1 and SUP2, the authenticator AUTH1 and the authentication server AS are enabled to communicate with each other to execute an authentication procedure and to thereby eventually grant the supplicant SUP1 or SUP2 access to the data communication network via its respective port of the authenticator.

This will now be explained in more detail.

Controlled and uncontrolled access is explained in the IEEE Standard *802.1X-2001,* page 8. The operation of the Port-based access control has the effect of creating two distinct points of access (not shown in Figure 1) to the authenticator System's point of attachment to the Local Area Network LAN. One point of access allows the uncontrolled exchange of packet data units, hereafter called PDU's, between the system and the other systems on the LAN, regardless of the authorizations state i.e. the uncontrolled port; the other point of access allows the exchange of PDU's only if the current state of the Port is authorized i.e. the controlled port. The uncontrolled and controlled Ports are considered to be part of the same point of attachment to the LAN e.g. port P1 for supplicant SUP1 in cooperation with authenticator AUTH1. Any frame received on the physical port is made available at both the controlled and uncontrolled ports; subject to Authorization State associated with the controlled port.

Furthermore, see also *802.1X-2001, page 8, last paragraph,* the point of attachment to the LAN can be provided by any physical or logical port that can provide a one-to-one connection to a supplicant system. For example, a single LAN MAC in a switched LAN infrastructure can provide the point of attachment. In LAN environments where the MAC method allows the possibility of a one-to-many relationship between an authenticator and a supplicant, for example in shared media environments, the creation of a distinct association between a single supplicant and a single authenticator is a necessary precondition for the access control mechanisms described in 802.1X-2001 to function.

It has to be remarked, as explained above, that the functionality of different single authenticators, each associated to a distinct supplicant, can be integrated in one global authenticator taking care of the different supplicants. Such an implementation, with one integrated authenticator AUTH1, is preferred for this particular embodiment. However, this is no limitation to the principle idea of the present invention.

The different roles in the access control mechanism of the two supplicants SUP1 and SUP2, the authenticator AUTH1 and the authentication server AS will now be explained.

The Authenticator AUTH1 uses the uncontrolled Port (not shown) for the purposes of exchanging protocol information with a respective supplicant and is further responsible for enforcing the authentication of one of the supplicants SUP1 or SUP2 that are attached to one of its controlled Ports, P1 or P2 respectively, and for controlling the authorization state of the respective controlled Port accordingly.

In order to perform the authentication, the Authenticator AUTH1 makes use of the Authentication Server AS. The Authentication Server AS may be collocated in the same System as the Authenticator AUTH1, or it may be located elsewhere, accessible via remote communication mechanisms, LAN-based or otherwise. This preferred embodiment describes an Authentication Server AS that is common to all authenticators of the same DCN. Indeed the nomadism requirement and the MAC address steeling is a problem that concerns the whole Ethernet communication network to which the authenticators are connected, and therefore it should be solved for the DCN as a whole. This is achieved by having the same AS for all the authenticators connected to the same Ethernet DCN.

The supplicant, SUP1 or SUP2, is responsible for communicating its credentials to the Authenticator AUTH1 in response to requests from the Authenticator AUTH 1. The Supplicant may also initiate authentication exchanges and perform Logoff exchanges.

Authentication occurs primarily at System initialization time, or when a Supplicant System is connected to a Port of an Authenticator System. Until authentication has successfully completed, the Supplicant System only has access to the Authenticator System to perform authentication exchanges, or to access any services offered by the Authenticator's System that are not subject to the access control restrictions placed on the Authenticator's controlled Port. Once authentication has successfully completed, the Authenticator System allows full access to the services offered via the Authenticator System's controlled Port.

For this embodiment, it is preferred to define an encapsulation format that allows the authentication messages to be carried directly by a LAN MAC service. This encapsulated form of EAP, known as EAP over LANs, or EAPOL, is used for all communication between the Supplicants SUP1 and SUP2 and the Authenticator AUTH 1. The Authenticator AUTH1 then performs a repackage of the EAP protocol for onward transmission to the Authentication Server AS. For this embodiment the RADIUS is preferred for providing this latter aspect of communication. However, it has to be remarked that this may be achieved by the use of other protocols.

Furthermore, once the authentication procedure is started, one of the following results can be generated:
a) The authentication procedure terminates due to excessive timeouts in the sequence of requests and responses. The aborting state is caused.
b) The authentication procedure terminates due to the Authentication Server AS returning a "Reject message" called herein "an authentication reply that comprises a result that comprises a refusal" to the Authenticator AUTH1.
c) The authentication procedure terminates due to the Authentication Server AS returning an "Accept message" to the Authenticator AUTH1, called herein "an authentication reply that comprises a result that comprises an authentication".

As it is explained above a supplicant e.g. SUP1 desires to receive a grant to access the data communication network DCN. The supplicant is also associated to the MAC1 address of the terminal unit TU1 and is coupled to a port P1 of the authenticator AU. A user password PSWD1 is provided by the first user U1 to the first customer premises equipment CPE1 and reaches the authenticator AU via the supplicant SUP1 and the first port P1.

In order to acquire this grant the transmitter TX of the authenticator AU transmits an authentication request to the authentication server AS. The authentication server AS makes an authentication decision based upon predefined rules and conditions. The decider DEC of the authentication server AS is here for used. Hereafter, the authentication server AS transmits an authentication reply that comprises a result of the authentication decision, to the authenticator AUTH 1.

However, in order to make the authentication decision for the supplicant SUP1, the authentication server AS also comprises, according to the present invention, a first registration memory MEM1 and a second registration memory MEM2. These registration memories comprise entries.

An entry of the first registration memory comprises an association between a Medium Access Control address, such as MAC2 of a granted supplicant SUP2, and a user password such as PSWD2, the granted supplicant previously received a grant with this user password PSWD2 to access the data communication network DCN.

An entry of the second registration memory comprises an association between a Medium Access Control address, such as MAC2 of a granted supplicant SUP2, and an authenticated port P2 being authenticated for this granted supplicant that already received a grant to access the data communication network DCN via this authenticated port P2.

The decider DEC generates the result RES of the authentication decision based upon predefined rules and conditions. The respective result of the authentication decision RES of the decider DEC is comprised in the authentication reply and is transmitted by the authentication server AS to the authenticator AUTH1.

The receiver RX of the authenticator AUTH1 receives from the authentication server AS the authentication reply.

The interpreter INTPR of the authenticator AUTH1 interprets the authentication reply as being received from an authentication server AS that is indeed enabled, according to the present invention, to support its authentication decision by means of e.g. such a first controlling step executed by a first controller CONT1. It has to be remarked that the interpreter is implemented by means of a decoder that decodes the authentication reply received from the authentication server AS.

The interpreter INTPR can be implemented in different ways. One possible way is that the interpreter INTPR knows according to a reference included in the authentication reply to which previous transmitted authentication request it is related and thereby to which supplicant e.g. SUP1 it concerns. The interpreter INTPR is enabled to retrieve based upon this supplicant SUP1 from a database of the authenticator AUTH1 the associated MAC address and port i.e. MAC1 and P1. Another possible implementation is that no authentication request database is kept and that the interpreter INTPR relies upon the information in the authentication reply. This means that the interpreter INTPR retrieves from the authentication reply the port and MAC address that is included in this authentication reply.

According to these possible implementations, the information i.e. the concerned MAC address and the port i.e. in the example MAC1 and P1, is forwarded to the filter FILT. The filter FILT is set according to the information that is comprised in the authentication reply and on its turn, the filter FILT filters the traffic for port P1 accordingly. This means that:
- in the event when the result RES(AUTH) comprises an authentication for the MAC1 address, whereby the supplicant SUP1 with the MAC1 address is indeed granted to access the data communication network DCN via the port P1 of the authenticator AU, the filter FILT accepts traffic of the supplicant SUP1 via the port P1, but only for the MAC1 address wherefore the authorization was given; and
- in the event when the result RES(REF) comprises a refusal for the MAC1 address whereby the supplicant SUP1 with MAC1 address is denied to access the data communication network DCN via the port P1 of the authenticator AU, the filter FILT refuses traffic of the supplicant SUP1 with MAC1 address.

It has to be remarked that the filter FILT can be implemented by means of one filter block for every port of the authenticator AUTH1 or it can be implemented as one centralized functional block that controls the traffic over the different ports of the authenticator AUTH1.

The decider DEC generates the result RES of the authentication decision based upon predefined rules and conditions.

These predefined rules and conditions comprise four controlling steps, respectively executed by the first controller CONT1, the second controller CONT2, the third controller CONT3 and the fourth controller CONT4.

The first controller CONT1 of the decider DEC executes, according to the present invention, a first controlling step of controlling the first registration memory MEM1 upon a presence of a previous entry that comprises a first association between the first Medium Access Control address MAC1 of a supplicant SUP1 and the user password PSWD1 for the supplicant.

The information such as this Medium access control address and the password is found in the authentication request and is extracted by the decider DEC from the Authentication request. The first controller CONT1 uses this information as input for the first registration memory MEM1. The first registration memory MEM 1 receives as input (MAC 1, PSWD1).

The first registration memory MEM reacts on this input with an OK message which means that the pair-entry (MAC1, PSWD1) was found in the first registration memory MEM1, or a NOK message that means that the pair-entry (MAC1, PSWD1) was not found in the registration memory MEM1. Such an Ok message or NOK message is taken into account by the decider DEC to generate a result RES which will be explained in a further paragraph.

In the following paragraphs the first controlling step will further be explained and a second controlling step will be introduced.

In the event when the first controlling step is positive, this means that an entry (MAC1, PSWD1) is found in the first registration memory MEM1 (not shown in Figure 1), the decider DEC generates a result RES(AUTH) that comprises an authentication for the port P1 and for the MAC1 address, whereby the supplicant SUP1 with the MAC1 address and with the password PSWD1 is granted to access the data communication network DCN via the port P1 of the authenticator AU. Since the respective association is present in the first registration memory MEM1, no further entry needs to be made.

It needs to be explained that the positive authentication result is independent of the port to which the supplicant is coupled. This means that the user with its terminal unit TU1 might as well be coupled to another port of the authenticator AUTH1 i.e. being present at another home (not shown in figure 1). User nomadism is herewith enabled in a secure way.

In the event when the first control is negative, this means that an entry (MAC1, PSWD1) is not found in the first registration memory MEM1 (not shown in Figure 1), the decider DEC comprises a second controller CONT2 to execute a second control on the first registration memory MEM upon a presence of a previous entry that comprises a second association between the MAC address MAC1 of the supplicant SUP1 with another password, i.e. a pair (MAC1; any other password besides the one in the authorization request).

In the event when the second control is negative, the decider DEC generates a result RES(AUTH) that comprises a an authentication for the port P1 and for the MAC1 address, whereby the supplicant SUP1 with the MAC1 address and with the password PSWD1 is granted to access the data communication network DCN via the port P1 of the authenticator AU. This means also that the Medium access control address MAC1 is not at all found in the first registration memory MEM1 whereby it is supposed that the supplicant SUP1 is requesting access for its first time. Since the respective association (MAC1; PASWD1) is not present in the first registration memory MEM1, an entry of this association is made.

It has to be remarked that the second controller CONT2 can be implemented by means of another functional block as the first controller CONT1. However, it has to be explained that both controllers can be implemented by means of one and the same functional block. According to such an implementation, the parameters that are used by such a global controller are defined in a different way depending from the controlling step that has to be executed different i.e. first controlling step with e.g. (MAC1; PSWD1) as input or a second controlling step with e.g. (MAC1; any other password besides PSWD1).

Furthermore, it has to be explained that both controlling steps can also be implemented by execution of one global controlling step that provides in stead of an OK message or an Not OK message, a more detailed feedback such as e.g. (MAC1 OK; PSWD1 NOK) which would mean that MAC1 is found in the first registration memory MEM1 in relation with such another port. However, the detailed description of the different ways of implementation goes beyond the aim of the present invention.

In the event when the first control is negative and in the event when the second control is negative, the authentication server AS inserts a new entry in the first registration memory MEM1 that comprises the MAC1 address of the supplicant SUP1 and the password of the authenticator PSWD1. Furthermore, the decider DEC generates a result RES(AUTH) that comprises an authentication for the port P1 and for the Medium Access Control address MAC1 whereby the supplicant SUP1 with the MAC1 address is granted to access the data communication network DCN via the port P1 of the authenticator AU.

In the event when the first control is negative and in the event when the second control is negative also a registration in the second registration memory MEM2 with an association between the first Medium Access control address MAC1 of the first supplicant SUP1 and the first port P1 of the authenticator (AUTH). Is has to be explained that in very exceptional cases such an entry (MAC1; P1) in the second registration memory MEM2 could already exist. A further check-up concerning MAC steeling should be made here before providing the authentication.

In the event when the second controlling step is positive i.e. an actual entry in the first registration memory MEM1 of the MAC1 with another password, the following controlling steps are used in the method of the present invention:
- executing with the third controller CONT3 a third controlling step of the second registration memory MEM2 upon a presence of a previous entry that comprises a third association between the first Medium Access Control address MAC1 of the first supplicant SUP1 and the first port P1 of the authenticator; and
- executing with a fourth controller CONT4 a fourth controlling step of controlling the second registration memory MEM2 upon a presence of a previous entry that comprises a fourth association between the first Medium Access Control address MAC1 of the first supplicant SUP1 and another port of said authenticator.

In the event when the third controlling step is positive, the method further comprises a step of generating a result that comprises an authentication for the first Medium Access Control address MAC1 with the first password PSWD1 and thereby granting the first supplicant SUP1 to access the data communication network DCN via the first port P1 of the authenticator AU. This means that although no association (MAC1; PSWD1) is known, the actual known association (MAC1; another PSWD) indicates a potential presence for (MAC1; P1). When this third association is indeed also known in the second registration memory MEM2, it is explained that the user U1 with PSWD1 is at another home using a computer (CPE1 with SUP1 having MAC1 address - not shown in Figure 1) of this other home and that this computer is coupled to port P1 of the authenticator AUTH1. A second way of user - nomadism is hereby allowed according to a secure way.

In the event when the third controlling step is negative and the fourth controlling step is positive, the method further comprises a step of generating a result that comprises a refusal for the first port P1 and for the first Medium Access Control address MAC1 and thereby denying the first supplicant SUP1 to access the data communication network DCN via the first port P1. Indeed, when no first association (MAC1; PSWD1) is known, but a second association (MAC1; another PSWD) is known; and when no third association (MAC1; P1) is known but a fourth association (MAC1; another P) is known in the second registration memory MEM2, it means that the user of the PSWD1 is steeling the MAC1 address.

This means that by taking into account, at this stage of the procedure of predefined rules and conditions, a potential earlier grant for a pair (MAC, port) - relation during the authentication decision of the decider DEC, and by setting the port P1 of the authenticator AUTH1 for the requesting supplicant SUP1 accordingly i.e. allowing traffic, in the event of authentication result, only for the MAC address MAC1 for which the authorization was provided, the granting of access for duplicated MAC address is avoided and malicious users are anticipated.

Hereby a method is provided whereby firstly, user nomadism is allowed and whereby, secondly, Medium Access Control address stealing prohibited.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. Method to grant a first supplicant (SUP1) access to a data communication network (DCN), said first supplicant (SUP1) having associated a first Medium Access Control address (MAC1) and being coupled to a first port (P1) of an authenticator (AU) of said data communication network (DCN),
said method comprises:
a step of transmitting an authentication request by said authenticator (AUTH) to an authentication server (AS) being coupled thereto; and
a step of making by said authentication server (AS) an authentication decision based upon predefined rules and conditions; and
a step of transmitting by said authentication server (AS) to said authenticator (AU) an authentication reply that comprises a result of said authentication decision, **characterized in that** said method further comprises
a step of
- developing by said authentication server (AS) a first registration memory (MEM1) that comprises entries whereby an entry comprises an association between a Medium Access Control Address of a granted supplicant and a granted password for said granted supplicant (SUP2), said granted supplicant received previously a grant to access said data communication network (DCN);
and that said predefined rules and conditions comprises a first controlling step of controlling said first registration memory (MEM1) upon a presence of a previous entry that comprises a first association between said first Medium Access Control Address of said first supplicant (MAC1) and a first password (PSWD1) for said first supplicant (SUP1); and
whereby in the event when said first controlling step being positive, said method further comprises
a step of generating a result that comprises an authentication for said first Medium Access Control address (MAC1) with said first password (PSWD1) and thereby granting said first supplicant (SUP1) to access said data communication network (DCN) via said first port (P1) of said authenticator (AU).

2. The method to grant a supplicant (SUP1) access to a data communication network (DCN) according to claim 1, whereby in the event when said first controlling step being negative said method further comprises
a second controlling step of controlling said first registration memory (MEM1) upon a presence of previous entry that comprises a second association between said first Medium Access Control address (MAC1) of said first supplicant (SUP1) with another password,
whereby in the event when said second controlling step being negative, said method further comprises a step of
generating a result that comprises an authentication for said first Medium Access Control address (MAC1) with said first password (PSWD1) and thereby granting said first supplicant (SUP1) to access said data communication network (DCN) via said first port (P1) of said authenticator (AU); and a step of
registering an entry in said first registration memory (MEM1) with said first association between said first Medium Access Control Address of said first supplicant (MAC1) and said first password (PSWD1) for said first supplicant (SUP1).

3. The method to grant a supplicant (SUP1) access to a data communication network (DCN) according to claim 2, whereby said method further comprises :
- developing by said authentication server (AS) a second registration memory (MEM2) that comprises entries whereby an entry comprises an association between a Medium Access Control address of a granted supplicant and an authenticated port for said granted supplicant that received previously a grant to access an allowed data communication network (DCN) via said authenticated port; and
in the event when said second controlling step being negative, also registering an entry in said second registration memory (MEM2) with an association between said first Medium Access Control Address (MAC1) of said first supplicant (SUP1) and said first port (P1) of the authenticator (AUTH).

4. The method to grant a supplicant (SUP1) access to a data communication network (DCN) according to claim 3, whereby said method further comprises, in the event when said second controlling step being positive:
- a third controlling step of controlling said second registration memory (MEM2) upon a presence of a previous entry that comprises a third association between said first Medium Access Control address (MAC1) of said first supplicant (SUP1) and said first port (P1) of said authenticator; and
- a fourth controlling step of controlling said second registration memory (MEM2) upon a presence of a previous entry that comprises a fourth association between said first Medium Access Control address (MAC1) of said first supplicant (SUP1) and another port of said authenticator; and
- in the event when said third controlling step being positive, said method further comprises a step of generating a result that comprises an authentication for said first Medium Access Control address (MAC1) with said first password (PSWD1) and thereby granting said first supplicant (SUP1) to access said data communication network (DCN) via said first port (P1) of said authenticator (AU); and
- in the event when said third controlling step being negative and said fourth controlling step being positive, generating a result that comprises a refusal for said first port (P1) and for first said Medium Access Control address (MAC1) and thereby denying said first supplicant (SUP1) to access said data communication network (DCN) via said first port (P1).

5. An authentication server (AS) to transmit to an authenticator (AU), upon reception of an authentication request from said authenticator (AUTH), an authentication reply that comprises a result of an authentication decision said authentication server (AS) comprises:
a decision means (DEC) to generate said result (RES) based upon predefined rules and conditions, said authentication request concerns a request to grant for a first supplicant (SUP1) access to a data communication network (DCN), said first supplicant (SUP1) having associated a first Medium Access Control address (MAC1) and being coupled to a first port (P1) of said authenticator (AU) of said data communication network (DCN), **characterized in that** said authentication server (AS) further comprises
a first registration memory (MEM1) coupled to said decision means (DEC), said first registration memory (MEM1) comprises entries whereby an entry comprises an association between a Medium Access Control address of a granted supplicant and a password for said granted supplicant that previously received a grant to access an allowed data communication network (DCN) via an authenticated port via which said granted supplicant being coupled to said authenticator (AU); and
that said decision means (DEC) comprises a first control means (CONT1) to execute a first control on said first registration memory (MEM1) upon a presence of a previous entry that comprises a first association between said first Medium Access Control address (MAC1) of said first supplicant (SUP1) and a first password (PSWD1) for said first supplicant (SUP1); and
that said decision means (DEC) is further included to generate, in the event when said first control is positive, a result (RES(AUTH) that comprises an authentication for said first port (P1) and for said first Medium Access Control address (MAC1) whereby said first supplicant (SUP1) being granted to access said data communication network (DCN) via said first port (P1) of said authenticator (AU).

6. The authentication server (AS) according to claim 5, wherein said decision means of said authentication server further comprises, a second control means (CONT2) to execute, in the event when said first control is negative, a second control on said first registration memory (MEM1) upon a presence of a previous entry that comprises a second association between said first Medium Access Control address (MAC1) with another password, and
whereby in the event when said second control is negative,
said decision means (DEC) generates a result (RES(AUTH) that comprises an authentication for said first port (P1) and for said first Medium Access Control Address (MAC1) whereby said first supplicant (SUP1) being granted to access said data communication network (DCN) via said first port (P1) of said authenticator (AU).

7. The authentication server (AS) according to claim 6, wherein said authentication server (AS) further comprises
a second registration memory (MEM2) coupled to said decision means (DEC), said second registration memory (MEM2) comprises entries whereby an entry comprises an association between a Medium Access Control Address of a granted supplicant and an authenticated port for said granted supplicant that previously received a grant to access an allowed data communication network (DCN) via said authenticated port via which said granted supplicant being coupled to said authenticator (AU); and
in the event when said second control is negative, said authentication server also registers an entry in said second registration memory (MEM2) with an association between said first Medium Access Control Address (MAC1) of said first supplicant (SUP1) and said first port (P1) of said first supplicant (MAC1).

8. The authentication server (AS) according to claim 7, wherein said decision means (DEC) further comprises:
- a third control means (CONT3) to execute a third control on said second registration means (MEM2) upon a presence of a previous entry that comprises a third association between said first Medium Access Control address (MAC1) of said first supplicant (SUP1) and said first port (P1) of said authenticator; and
- a fourth control means (CONT4) to execute a fourth control on said second registration memory (MEM2) upon a presence of a previous entry that comprises a fourth association between said first Medium Access Control Address (MAC1) of said first supplicant (SUP1) with another port of said authenticator (AU); and
said decision means (DEC) is further included to generate, in the event when said second control is positive and in the event when said third control is positive, a result (RES(AUTH) that comprises an authentication for said first port (P1) and for said first Medium Access Control address (MAC1) whereby said first supplicant (SUP1) being granted to access said data communication network (DCN) via said first port (P1) of said authenticator (AU); and
said decision means (DEC) is further included to generate, in the event when said second control is positive and said third control is negative and said fourth control is positive, a result (RES(REF) that comprises a refusal for said first port (P1) and for said first Medium Access Control Address (MAC1) whereby said first supplicant (SUP1) is denied to access said data communication network (DCN) via said port (P1) of said authenticator (AU).

9. An authenticator (AUTH1) that desires to enable a first supplicant (SUP1) access to a data communication network (DCN), said first supplicant (SUP1) having associated a first Medium Access Control address (MAC1) and being coupled to a first port (P) of said authenticator (AU) of said data communication network (DCN),
said authenticator (AUTH) comprises therefore
a transmitter (TX) to transmit an authentication request to an authentication server (AS) being coupled to said authenticator (AU); and
a receiver (RX) to receive from said authentication server (AS) an authentication reply that comprises a result of an authentication decision based upon predefined rules and conditions, **characterized in that**
said authenticator (AUTH) comprises an interpreter (INTPR) to interpret said authentication reply as being received from an authentication server (AS) according to claim 5 and to set a filter of said authenticator (AUTH1) accordingly, whereby
in the event when said result (RES(AUTH) comprises an authentication for said first port (P1) and for said first Medium Access Control address (MAC1) whereby said first supplicant (SUP1) with said first Medium Access Control address (MAC1) being granted to access said data communication network (DCN) via said first port (P1) of said authenticator (AU), said filter accepts traffic of said first supplicant (SUP1) via said first port (P1) only for said first Medium Access Control address (MAC1); and whereby
in the event when said result (RES(REF) comprises a refusal for said first port (P1) and for said first Medium Access Control address (MAC1) whereby said first supplicant (SUP1) with said first Medium Access Control address (MAC1) being denied to access said data communication network (DCN) via said first port (P1) of said authenticator (AU), said filter refuses traffic of said first supplicant (SUP1).
